(19) Europäisches Patentamt
European Patent Office
Office européen des brevets

(11) **EP 2 621 053 A1**

(12) **EUROPEAN PATENT APPLICATION**
published in accordance with Art. 153(4) EPC

(43) Date of publication:
**31.07.2013 Bulletin 2013/31**

(51) Int Cl.:
*H02J 7/10* (2006.01)    *H01M 10/44* (2006.01)
*H01M 10/48* (2006.01)   *H02J 7/00* (2006.01)

(21) Application number: **11826655.0**

(22) Date of filing: **10.08.2011**

(86) International application number:
**PCT/JP2011/068223**

(87) International publication number:
**WO 2012/039209 (29.03.2012 Gazette 2012/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.09.2010  JP 2010210892**

(71) Applicant: **Panasonic Corporation
Osaka 571-8501 (JP)**

(72) Inventors:
• **TAKAHASHI, Atsushi
  Osaka 540-6207 (JP)**
• **KATSURA, Yoshinori
  Osaka 540-6207 (JP)**

(74) Representative: **Grünecker, Kinkeldey,
Stockmair & Schwanhäusser
Leopoldstrasse 4
80802 München (DE)**

(54) **RECHARGEABLE ELECTRIC APPARATUS**

(57)    A rechargeable electric apparatus includes a switching device (12), a first shunt resistor (13-1) that connects the switching device (12) and a positive electrode of a secondary battery (11), a second shunt resistor (13-2) that connects a load (14) and the positive electrode of the secondary battery (11), and a control unit (15). The control unit (15) controls turning on and off of the switching device (12) on the basis of voltages at two ends of the first shunt resistor (13-1) and voltages at two ends of the second shunt resistor (13-2) in order to control a supply current flowing to the secondary battery (11) via the first shunt resistor (13-1) and to control a load current flowing to the load (14) via the second shunt resistor (13-2).

FIG. 1

## Description

[Technical Field]

The present invention relates to a rechargeable electric apparatus which drives a load with electric power supplied from a secondary battery or via a charge adapter.

[Background Art]

As a technique for controlling drive of a load such as a motor, a technique described in the following document, for example, has heretofore been known (see PTL 1). This PTL 1 describes a technique of motor drive control for controlling drive of a motor by detecting a current that flows through a motor, converting the current into a voltage with a shunt resistor, and amplifying the converted voltage with an operational amplifier.

[Citation List]

[Patent Literature]

    [PTL 1]
    JP 2000-201493 A

[Summary of Invention]

As described above, the conventional configuration to amplify the voltage acquired at the shunt resistor requires the structure such as the operational amplifier to amplify the voltage. This requirement leads to an increase in size of a circuit configuration and to a cost increase as well.

The present invention has therefore been made in view of the above-mentioned circumstance, and an object thereof is to provide a simple, small, and low-cost rechargeable electric apparatus.

An aspect of the present invention is a rechargeable electric apparatus configured to charge a secondary battery by using power supply from outside via a charge adapter configured to be attachably and detachably connected to the rechargeable electric apparatus, the rechargeable electric apparatus being provided with a load to be driven with power supply from the secondary battery or from outside via the charge adapter. The rechargeable electric apparatus comprises: a switching device configured to receive the power supply from outside via the charge adapter, the switching device being configured to be turned on and off on the basis of a switching signal to supply a supply current to the rechargeable electric apparatus; a first shunt resistor connected between the switching device and a positive electrode of the secondary battery, the first shunt resistor being configured to detect the supply current supplied to the rechargeable electric apparatus via the switching device; a second shunt resistor connected between the load and the positive electrode of the secondary battery, the second shunt resistor being configured to detect a load current supplied to the load; and a control unit configured to receive inputs of voltages at two ends of the first shunt resistor and at two ends of the second shunt resistor when the switching device is turned on, the control unit being configured to control turning on and off of the switching device on the basis of the inputted voltages to control the supply current and the load current. A resistance value of the first shunt resistor is set equal to or above a value obtained by dividing a least resolution of an A/D conversion voltage when the control unit converts an inputted analog voltage into a digital voltage by a minimum detectable value of the supply current. A resistance value of the second shunt resistor is set equal to or above a value obtained by dividing the least resolution of the A/D conversion voltage when the control unit converts the inputted analog voltage into the digital voltage by a minimum detectable value of the load current.

The control unit may calculate the supply current as a value obtained by dividing a voltage difference between the two ends of the first shunt resistor by the resistance value of the first shunt resistor, may calculate the load current as a value obtained by dividing a voltage difference between the two ends of the second shunt resistor by the resistance value of the second shunt resistor, and may control turning on and off of the switching device in such a manner as to equalize the supply current and the load current.

When the load is driven, the control unit may calculate the supply current as a value obtained by dividing a voltage difference between the two ends of the first shunt resistor by the resistance value of the first shunt resistor, may calculate the load current as a value obtained by dividing a voltage difference between the two ends of the second shunt resistor by the resistance value of the second shunt resistor, may compare a voltage V0 at ends of the first shunt resistor and of the second shunt resistor, to which the positive electrode of the secondary battery is connected, with a predetermined first reference voltage Vt1, and may control turning on and off of the switching device in such a manner as to satisfy the following conditions, if the voltage V0 > the voltage Vt1, then the supply current < the load current, if the voltage V0 = the voltage Vt1, then the supply current = the load current, and if the voltage V0 < the voltage Vt1, then the supply current > the load current.

When the load is not driven, the control unit may calculate the supply current as a value obtained by dividing a voltage difference between the two ends of the first shunt resistor by the resistance value of the first shunt resistor, may calculate a leak current of the rechargeable electric apparatus as a value obtained by dividing a voltage difference between the two ends of the second shunt resistor by the resistance value of the second shunt resistor, may compare a voltage V0 at ends of the first shunt resistor and of the second shunt resistor, to which the positive electrode of the secondary battery is connected, with a predetermined second reference voltage Vt2, and may control turning on and off of the switching device in such a manner as to satisfy the following conditions, if the voltage V0 < the voltage Vt2, then the supply current > the leak current, and if the voltage V0 $\geq$ the voltage Vt2, then the supply current = the leak current.

The rechargeable electric apparatus may further comprises: a switch connected between the positive electrode of the secondary battery and the first and second shunt resistors, the switch being configured to be turned off when the supply current becomes equal to the load current or the leak current so as to electrically disconnect the secondary battery from the switching device and the load.

The control unit may calculate a battery capacity of the secondary battery by: subtracting a current obtained by dividing a voltage difference between the two ends of the second shunt resistor by the resistance value of the second shunt resistor from a current obtained by dividing a voltage difference between the two ends of the first shunt resistor by the resistance value of the first shunt resistor; and accumulating a plurality of the values obtained by the subtraction.

According to the present invention, the first shunt resistor for detecting the supply current supplied to the apparatus and the second shunt resistor for detecting the load current are connected to the positive electrode side of the secondary battery. The resistance value of the first shunt resistor is set equal to or above the value obtained by dividing the least resolution of the A/D conversion voltage of the control unit by the minimum detectable value of the supply current. The resistance value of the second shunt resistor is set equal to or above the value obtained by dividing the least resolution of the A/D conversion voltage of the control unit by the minimum detectable value of the load current.

Thus, the supply current and the load current can be detected without subjecting the voltages acquired at the first and second shunt resistors to amplification processing. As a result, the present invention can properly control a charging operation of the secondary battery and drive of the load without requiring an amplification circuit, thereby providing a simple, small, and low-cost rechargeable electric apparatus.

[Brief Description of Drawings]

[Fig. 1]

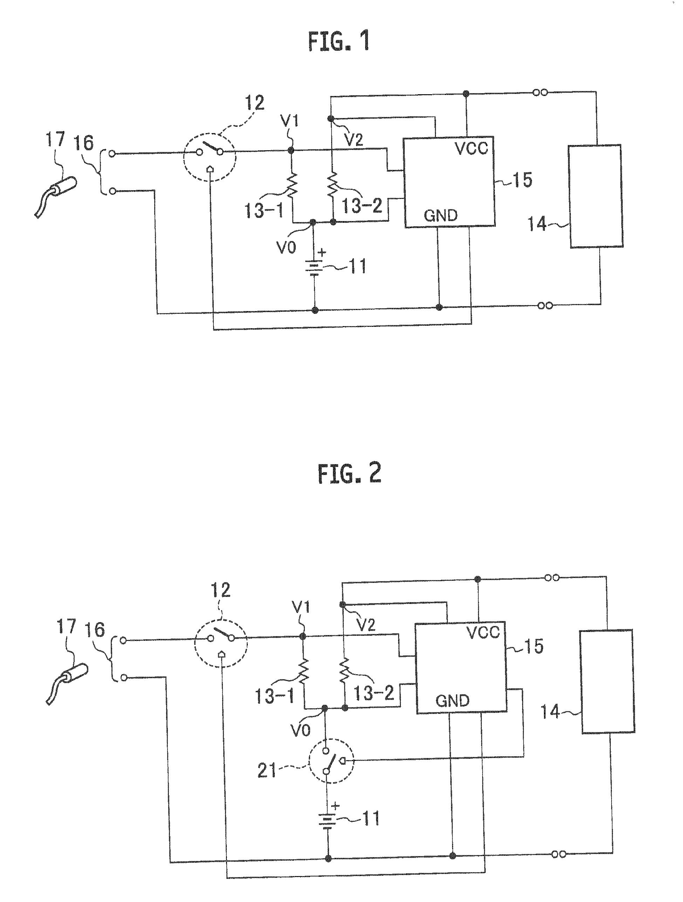

Fig. 1 is a view showing a configuration of a rechargeable electric apparatus according to a 1st embodiment of the present invention.
[Fig. 2]
Fig. 2 is a view showing a configuration of a rechargeable electric apparatus according to a 2nd embodiment of the present invention.

[Description of Embodiments]

Embodiments for carrying out the present invention will be described below with reference to the drawings.

[1st Embodiment]

Fig. 1 is a view showing a configuration of a rechargeable electric apparatus according to a 1st embodiment of the present invention. The rechargeable electric apparatus of the 1st embodiment shown in Fig. 1 includes a secondary battery 11, a switching device 12, a first shunt resistor 13-1, a second shunt resistor 13-2, a load 14, and a control unit 15. The rechargeable electric apparatus can function while being embedded in an apparatus such as an electric shaver, an electric hair clipper, a hair remover, and an electric tooth brush.

The secondary battery 11 is made of a battery such as a nickel-metal hydride battery, a NiCad (nickel-cadmium) battery, and a lithium battery. The secondary battery 11 is charged by DC power, which is obtained by converting AC power into direct current. Here, the AC power is supplied from an AC commercial power supply in a range from about 100 V to 240 V via an AC adapter 17 that can be attachably and detachably connected to adapter connection terminals 16. The secondary battery 11 inputs its battery voltage V0 to the control unit 15.

The switching device 12 is connected between one of the adapter connection terminals 16 and the first shunt resistor 13-1, and is made of a transistor, for example. The switching device 12 receives the DC power fed through the AC adapter 17 and undergoes on-off control on the basis of a switching signal, thereby controlling and adjusting a charge current to be supplied to the secondary battery 11.

The first shunt resistor 13-1 is a resistor that functions upon detection of a supply current to be supplied from the AC adapter 17 to the rechargeable electric apparatus, and is connected between the switching device 12 and a positive electrode (+ electrode) side of the secondary battery 11. A voltage at one end of the first shunt resistor 13-1, namely, a voltage V1 at a connecting point connected to the switching device 12 is inputted to the control unit 15. The first shunt resistor 13-1 has low resistance in a range from several milliohms to several hundreds of milliohms, for example. Here, its resistance value is set in relation to resolution of A/D conversion to be described later, and independently and separately from a resistance value of the second shunt resistor 13-2.

The second shunt resistor 13-2 is a resistor that functions upon detection of a load current to be supplied to the load 14, and is connected between the load 14 and the positive electrode (+ electrode) side of the secondary battery 11. A voltage at one end of the second shunt resistor 13-2, namely, a voltage V2 at a connecting point connected to the load 14 is inputted to the control unit 15. The second shunt resistor 13-2 has low resistance in a range from several milliohms to several hundreds of milliohms, for example. Here, its resistance value is set in relation to the resolution of A/D conversion to be described later, and independently and separately from the resistance value of the first shunt resistor 13-1.

The load 14 is formed of a DC motor, for example, and is driven by electric power fed from the secondary battery 11 or the AC adapter 17. Hence, the rechargeable electric apparatus is able to drive the load 14 in parallel with a charging operation of the secondary battery 11, and functions as a so-called AC-rechargeable electric apparatus.

The control unit 15 functions as the center of control which controls operations of the rechargeable electric apparatus. The control unit 15 is implemented, for example, by a microcomputer equipped with hardware resources including a CPU, a storage device, and so forth which are required in a computer that controls a variety of operational processing based on programs. Accordingly, charging and discharging operations of the secondary battery 11 as well as the load current are controlled through execution of a processing program by the CPU of the microcomputer constituting the control unit 15. The control unit 15 is connected to common ground (ground potential) to which a negative electrode (- electrode) of the secondary battery 11 and the load 14 are connected.

The control unit 15 provides the switching signal to the switching device 12 and performs the on-off control of the switching device 12 on the basis of the switching signal. In the on-off control, the current supplied from the AC adapter 17 is controlled to increase or decrease by variably controlling a duty ratio of the switching signal, namely, on-time per cycle of the switching signal. Thus, the control unit 15 performs charge control of the secondary battery 11 by supplying a desired charge current, which corresponds to the battery voltage V0 of the secondary battery 11, to the secondary battery 11, for example. Meanwhile, the control unit 15 performs drive control of the load 14 by supplying a load current, which corresponds to the battery voltage V0 of the secondary battery 11, to the load 14, for example.

The control unit 15 calculates the supply current supplied from the AC adapter 17 as (V1-V0)/R1 by using the voltage V1 at the one end of the first shunt resistor 13-1, the battery voltage V0 of the secondary battery 11, and a resistance value R1 of the first shunt resistor 13-1. Meanwhile, the control unit 15 calculates the load current supplied to the load 14 as (V2-V0)/R2 by using the voltage V2 at the one end of the second shunt resistor 13-2, the battery voltage V0 of the secondary battery 11, and a resistance value R2 of the second shunt resistor 13-2. The control unit 15 controls the charging operation of the secondary battery 11 as well as the supply of the load current on the basis of the currents calculated as described above.

If the voltages V0, V1, and V2 inputted to the control unit 15 are likely to exceed a power supply voltage of the control unit 15, the voltages V0, V1, and V2 are divided and stepped down by a resistor, for example, and are then inputted to the control unit 15.

The resistance value of the first shunt resistor 13-1 is determined as described below.

The power supply voltage of the control unit 15 is defined as VDD (V) while resolution of an A/D conversion function of the control unit 15 for converting an inputted analog signal into a digital signal in the course of internal processing is assumed to be N bits, for example. In this case, a minimum voltage value detectable in the A/D conversion, i.e., the least resolution (LSB) of an A/D conversion voltage is expressed by the following formula (1):

```
(Numerical Expression 1)

    Least resolution (LSB) = VDD/2^N (V)        (1)

Hence, 1 LSB is equal to VDD/2^N (V).
```

Next, if the minimum value of the supply current to be supplied from the AC adapter 17 via the switching device 12 and to be detected (the least resolution of the supply current) is defined as I1min (A), then a relation of I1min with the resistance value R1 of the first shunt resistor 13-1 is expressed by the following formula (2):

$$\text{(Numerical Expression 2)}$$

$$I1min \times R1 \geq VDD/2^N \qquad (2)$$

Hence, the resistance value R1 of the first shunt resistor 13-1 is expressed by the following formula (3):

$$\text{(Numerical Expression 3)}$$

$$R1 \geq (VDD/2^N)/I1min \qquad (3)$$

Thus, the resistance value R1 of the first shunt resistor 13-1 is set equal to or above (the least resolution of the A/D conversion voltage) / (the minimum detectable value of the supply current).

For example, if the power supply voltage VDD of the control unit 15 is about 3 V and the resolution of the A/D conversion is 10 bits, then the least resolution (LSB) of the A/D conversion voltage is about 2.9 mV. Further, if the minimum detectable current value of the supply current is about 10 mA, then the resistance value R1 of the first shunt resistor 13-1 is set to about 290 mΩ.

As described above, when the minimum detectable current value of the supply current is set constant, the resistance value R1 of the first shunt resistor 13-1 can be made smaller as the resolution of the A/D conversion of the control unit 15 is made higher.

The resistance value of the second shunt resistor 13-2 is determined almost in the same manner as above.

As similar to the above case, the power supply voltage of the control unit 15 is defined as VDD (V) and the resolution of the A/D conversion function is assumed to be N bits, for example. In this case, the minimum voltage value detectable in the A/D conversion, i.e., the least resolution (LSB) of the A/D conversion voltage is expressed by the above-mentioned formula (1).

Next, if the minimum value of the load current to be supplied from the AC adapter 17 via the switching device 12 and to be detected (the least resolution of the load current) is defined as I2min (A), then a relation of I2min with the resistance value R2 of the second shunt resistor 13-2 is expressed by the following formula (4):

$$\text{(Numerical Expression 4)}$$

$$I2min \times R2 \geq VDD/2^N \qquad (4)$$

Hence, the resistance value R2 of the second shunt resistor 13-2 is expressed by the following formula (5):

$$\text{(Numerical Expression 5)}$$

$$R2 \geq (VDD/2^N)/I2min \qquad (3)$$

Thus, the resistance value R2 of the second shunt resistor 13-2 is set equal to or above (the least resolution of the A/D conversion voltage) / (the minimum detectable value of the load current).

As described above, the 1st embodiment adopts the configuration to connect the first shunt resistor 13-1 for detecting the supply current supplied from the AC adapter 17 to the apparatus, and the second shunt resistor 13-2 for detecting the load current, to the positive electrode side of the secondary battery 11. The voltage V1 at the one end of the first shunt resistor 13-1 and the voltage V2 at the one end of the second shunt resistor 13-2 show positive potential by adopting this configuration. Accordingly, unlike the related art, it is unnecessary to provide a structure such as an operational amplifier for inverting the polarity of voltages generated at the shunt resistors or for offsetting the voltages.

In the meantime, detection of the voltage V1 at the one end of the first shunt resistor 13-1 and the voltage V2 at the one end of the second shunt resistor 13-2 makes it possible to eliminate adverse effects caused by fluctuations in the internal resistance, the battery voltage, and the like of the secondary battery 11 attributed to a change in the ambient temperature. Thus, the rechargeable electric apparatus can accurately detect the supply current and the load current.

Furthermore, the resistance value R1 of the first shunt resistor 13-1 is set such that the voltage equal to or above the least resolution at the time of A/D conversion is inputted to the control unit 15 when the supply current is detected. Meanwhile, the resistance value R2 of the second shunt resistor 13-2 is set such that the voltage equal to or above the least resolution at the time of A/D conversion is inputted to the control unit 15 when the load current is detected. Adoption of this configuration enables detection of the currents by allowing the voltages V1 and V2, which are generated at the one end of the first shunt resistor 13-1 and the one end of the second shunt resistor 13-2, to be inputted to the control unit 15 without being amplified. Hence, it is unnecessary to provide a structure such as an operational amplifier for amplifying the voltages.

Accordingly, the structure of the rechargeable electric apparatus can be simplified, downsized, and reduced in cost as compared to the related art. In the meantime, since amplification circuits such as operational amplifiers vary largely among the individual pieces, each device generally undergoes correction of such a variation, which may lead to deterioration in detection accuracy. On the other hand, the 1st embodiment does not require the amplification circuit such as the operational amplifier, and thus the supply current and the load current can be detected accurately. As a consequence, the charge current can be accurately detected even when the charge current differs depending on the type of the secondary battery 11 or the type of the AC adapter 17. Accordingly, the rechargeable electric apparatus can properly control the charging operation of the secondary battery 11 in various types of the secondary battery 11 and/or the AC adapter 17.

In addition, the first shunt resistor 13-1 for detecting the supply current and the second shunt resistor 13-2 for detecting the load current are provided independently and separately from each other. Thus, the resistance values of the respective shunt resistors can be set independently and separately depending on the value of the current to be detected. Accordingly, it is possible to improve detection accuracy of the supply current and the load current as compared to the case of detecting both of the supply current and the load current by use of a single shunt resistor.

[2nd Embodiment]

Next, a rechargeable electric apparatus according to a 2nd embodiment of the present invention will be described.

In addition to the configuration and functions similar to those of the 1st embodiment described above, the 2nd embodiment is characterized in that the rechargeable electric apparatus controls the supply current and the load current in equilibrium.

Specifically, assuming that the supply current supplied from the AC adapter 17 is I1 and the load current is I2, the control unit 15 performs the on-off control of the switching device 12 in such a manner as to satisfy I1 = I2. Here, assuming that the resistance value of the first shunt resistor 13-1 is R1 and the resistance value of the second shunt resistor 13-2 is R2, the supply current I1 is equal to (V1-V0)/R1 and the load current I2 is equal to (V2-V0)/R2.

In this state of equilibrium, the supply current supplied from the AC adapter 17 via the switching device 12 is balanced with the load current, and no current therefore flows into the secondary battery 11. As a result, the battery voltage of the secondary battery 11 can be kept constant. Thus, when the load 14 is formed of a DC motor, the motor can be prevented from making buzzing noise attributed to a change in the battery voltage of the secondary battery 11 in a transient phenomenon when the load 14 is driven.

[3rd Embodiment]

Next, a rechargeable electric apparatus according to a 3rd embodiment of the present invention will be described.

In addition to the configuration and functions similar to those of the 1st embodiment described above, the 3rd embodiment is characterized in that a magnitude relationship between the supply current and the load current at the time of driving the load 14 is controlled on the basis of the battery voltage V0 of the secondary battery 11.

When the load 14 is driven, the control unit 15 compares the battery voltage V0 of the secondary battery 11 with a predetermined first reference voltage Vt1, and determines the magnitude relationship between the supply current and the load current on the basis of the result of comparison. Specifically, the switching device 12 is subjected to the on-off control in such a manner as to satisfy the magnitude relationships shown below in (1) to (3).

(1) If V0 > Vt1, then supply current I1 < load current I2
(2) If V0 = Vt1, then supply current I1 = load current I2
(3) If V0 < Vt1, then supply current I1 > load current I2

Here, the first reference voltage Vt1 is set on the basis of a maximum output voltage which is determined depending on the type of the secondary battery 11, for example. When the secondary battery 11 is made of a lithium battery having the maximum output voltage of about 4.2 V, for instance, the first reference voltage Vt1 is set in the neighborhood of the maximum output voltage such as about 4.0 V. Meanwhile, assuming that the resistance value of the first shunt resistor 13-1 is R1 and the resistance value of the second shunt resistor 13-2 is R2, the supply current I1 is equal to (V1-V0)/R1 and the load current I2 is equal to (V2-V0)/R2.

In the case of (1), the control unit 15 determines that the battery capacity of the secondary battery 11 is close to full charge and the secondary battery 11 is therefore available for discharge. Hence, the battery voltage V0 is gradually reduced toward the first reference voltage Vt1. In the case of (2), the control unit 15 determines that the secondary battery 11 does not need to be charged and the secondary battery 11 is therefore not charged. Hence, the battery voltage V0 does not change. In the case of (3), the control unit 15 determines that the secondary battery 11 needs to be charged and the secondary battery 11 is charged while the load 14 is driven. Hence, the battery voltage V0 gradually comes close to the first reference voltage Vt.

As described above, in the 3rd embodiment, it is possible to prevent a variation in the battery voltage by determining the necessity of charging the secondary battery 11. Thus, a battery capacity shortage of the secondary battery 11 can be avoided. Furthermore, when the load 14 is formed of a DC motor, the motor can be prevented from making buzzing noise attributed to a change in the battery voltage of the secondary battery 11 in a transient phenomenon when the load 14 is driven.

[4th Embodiment]

Next, a rechargeable electric apparatus according to a 4th embodiment of the present invention will be described.

In addition to the configuration and functions similar to those of the 1st embodiment described above, the 4th embodiment is characterized in that a magnitude relationship between the supply current and a leak current at the time of not driving the load 14 is controlled on the basis of the battery voltage V0 of the secondary battery 11. Here, the leak current is mainly composed of a current consumed by the control unit 15 because the control unit 15 remains in an on-state even when the load is not driven. Here, the current consumed by the control unit 15 is considerably lower than the load current and can therefore be regarded as the leak current relative to a consumption current consumed by the entire apparatus when the load 14 is driven.

When the load 14 is not driven, the control unit 15 compares the battery voltage V0 of the secondary battery 11 with a predetermined second reference voltage Vt2, and determines the magnitude relationship between the supply current and the leak current on the basis of the result of comparison. Specifically, the switching device 12 is subjected to the on-off control in such a manner as to satisfy the magnitude relationships shown below in (4) and (5).

(4) If V0 < Vt2, then supply current I1 > leak current I3
(5) If V0 ≥ Vt2, then supply current I1 = load current I3

Here, the first reference voltage Vt2 is set on the basis of the maximum output voltage which is determined depending on the type of the secondary battery 11, for example. When the secondary battery 11 is made of a lithium battery having the maximum output voltage (at the time of full charge) of about 4.2 V, for instance, the second reference voltage Vt2 is set to a voltage which is about 90% as high as the maximum output voltage, for example. Meanwhile, assuming that the resistance value of the first shunt resistor 13-1 is R1 and the resistance value of the second shunt resistor 13-2 is R2, the supply current I1 is equal to (V1-V0)/R1 and the leak current I3 is equal to (V2-V0)/R2.

In the case of (4), the control unit 15 assumes that the battery voltage V0 is gradually reduced due to the leak current I3 and the battery capacity is therefore decreasing. Accordingly, the secondary battery 11 is charged by setting the supply current 11 equal to or above the leak current I3. In the case of (5), the control unit 15 determines that the battery capacity of the secondary battery 11 does not yet require charging. Hence, the leak current I3 is offset by the supply current I1 so as to avoid discharging from the secondary battery 11.

As described above, in the 4th embodiment, when the load 14 is not driven and the apparatus is not in use, it is possible to avoid discharging of the secondary battery 11 by offsetting the leak current of the apparatus with the supply current from the AC adapter 17, and thereby to prevent a drop in the battery capacity. Meanwhile, if the battery capacity of the secondary battery 11 drops to a level that requires charging, then it is possible to offset the leak current of the apparatus with the supply current and to charge the secondary battery 11 at the same time. Thus, a drop in the battery capacity of the secondary battery 11 can be avoided.

[5th Embodiment]

Fig. 2 is a view showing a configuration of a rechargeable electric apparatus according to a 5th embodiment of the present invention. In Fig. 2, the rechargeable electric apparatus of the 5th embodiment is characterized in that the configuration shown in Fig. 1 further includes a switch 21. The rest of the configuration is similar to those in Fig. 1.

The switch 21 is connected between a connecting point of the first shunt resistor 13-1 with the second shunt resistor 13-2 and the positive electrode of the secondary battery 11, and is subjected to on-off control on the basis of a switching control signal provided from the control unit 15.

In the 5th embodiment, the supply current and the load current are controlled in equilibrium as in the 2nd embodiment described above. Specifically, assuming that the supply current supplied from the AC adapter 17 is I1 and the load current is I2, the control unit 15 performs the on-off control of the switching device 12 in such a manner as to satisfy I2 = I2. Here, assuming that the resistance value of the first shunt resistor 13-1 is R1 and the resistance value of the second shunt resistor 13-2 is R2, the supply current I1 is equal to (V1-V0)/R1 and the load current I2 is equal to (V2-V0)/R2.

In this state of equilibrium, the supply current supplied from the AC adapter 17 via the switching device 12 is balanced with the load current, and no current therefore flows into the secondary battery 11. In this state, the switch 21 is turned off by the switching control signal. As a consequence, the secondary battery 11 is disconnected from the AC adapter 17 and the load 14.

Even when the supply current is balanced with the load current as described above, it is difficult to completely match the currents and there still remains a slight difference between the currents. For this reason, a slight charge current or discharge current flows through the secondary battery 11. Such a flow leads to shortening the life of the battery.

Accordingly, in the 5th embodiment, unnecessary charge and discharge currents can be avoided by turning off the switch 21 and disconnecting the secondary battery 11 when the supply current is balanced with the load current. As a result, it is possible to protect the secondary battery 11 and to lengthen the life of the secondary battery 11.

In the meantime, when the leak current described in the 4th embodiment is taken into account instead of the load current, it is also possible to turn off the switch 21 and to disconnect the secondary battery 11 similarly to the above description.

[6th Embodiment]

Next, a rechargeable electric apparatus according to a 6th embodiment of the present invention will be described.

In addition to the configuration and functions similar to those of the 1st embodiment described above, the 5th embodiment is characterized in that the rechargeable electric apparatus is configured to calculate the battery capacity of the secondary battery 11 on the basis of the supply current and the load current.

Assuming that the supply current supplied from the AC adapter 17 to the apparatus via the switching device 12 is I1 and the load current consumed by the load 14 is I2, the control unit 15 accumulates values (I1 - I2) each corresponding to a difference between the supply current and the load current. Here, assuming that the resistance value of the first shunt resistor 13-1 is R1 and the resistance value of the second shunt resistor 13-2 is R2, the supply current I1 is equal to (V1-V0)/R1 and the load current I2 is equal to (V2-V0)/R2.

Each value (I1 - I2) represents a portion of the charge current flowing into the secondary battery 11. Hence, the battery capacity can be calculated by accumulating such portions of the charge current.

As described above, the 6th embodiment is designed to accurately detect both of the currents, namely, the supply current and the load current, by using the separate shunt resistors that are respectively corresponding thereto. Thus, the battery capacity of the secondary battery 11 can be calculated accurately. As a result, it is possible to accurately determine the necessity of charging the secondary battery 11 and to properly charge the secondary battery 11.

It is to be noted that the entire contents of Japanese Patent Application No. 2010-210892 (filed on September 21, 2010) are incorporated herein by reference.

Although the contents of the present invention have been described with reference to the examples, it is obvious to those skilled in the art that the present invention is not limited onto to the descriptions stated herein and that various modifications and improvements are possible.

[Industrial Applicability]

According to the present invention, the supply current and the load current can be detected without subjecting the voltages acquired at the shunt resistors to amplification processing. As a result, it is possible to properly control a charging operation of the secondary battery and drive of the load without requiring an amplification circuit, and thereby to provide a simple, small, and low-cost rechargeable electric apparatus.

[Reference Signs List]

11 secondary battery
12 switching device
13 shunt resistor

14 load

15 control unit

16 adapter connection terminal

17 AC adapter

21 switch

**Claims**

1. A rechargeable electric apparatus configured to charge a secondary battery by using power supply from outside via a charge adapter configured to be attachably and detachably connected to the rechargeable electric apparatus, the rechargeable electric apparatus being provided with a load to be driven with power supply from the secondary battery or from outside via the charge adapter, the rechargeable electric apparatus comprising:

   a switching device configured to receive the power supply from outside via the charge adapter, the switching device being configured to be turned on and off on the basis of a switching signal to supply a supply current to the rechargeable electric apparatus;
   a first shunt resistor connected between the switching device and a positive electrode of the secondary battery, the first shunt resistor being configured to detect the supply current supplied to the rechargeable electric apparatus via the switching device;
   a second shunt resistor connected between the load and the positive electrode of the secondary battery, the second shunt resistor being configured to detect a load current supplied to the load; and
   a control unit configured to receive inputs of voltages at two ends of the first shunt resistor and at two ends of the second shunt resistor when the switching device is turned on, the control unit being configured to control turning on and off of the switching device on the basis of the inputted voltages to control the supply current and the load current, wherein
   a resistance value of the first shunt resistor is set equal to or above a value obtained by dividing a least resolution of an A/D conversion voltage when the control unit converts an inputted analog voltage into a digital voltage by a minimum detectable value of the supply current, and
   a resistance value of the second shunt resistor is set equal to or above a value obtained by dividing the least resolution of the A/D conversion voltage when the control unit converts the inputted analog voltage into the digital voltage by a minimum detectable value of the load current.

2. The rechargeable electric apparatus according to claim 1, wherein
   the control unit
   calculates the supply current as a value obtained by dividing a voltage difference between the two ends of the first shunt resistor by the resistance value of the first shunt resistor,
   calculates the load current as a value obtained by dividing a voltage difference between the two ends of the second shunt resistor by the resistance value of the second shunt resistor, and
   controls turning on and off of the switching device in such a manner as to equalize the supply current and the load current.

3. The rechargeable electric apparatus according to any one of claims 1 and 2, wherein
   when the load is driven, the control unit

calculates the supply current as a value obtained by dividing a voltage difference between the two ends of the first shunt resistor by the resistance value of the first shunt resistor,

calculates the load current as a value obtained by dividing a voltage difference between the two ends of the second shunt resistor by the resistance value of the second shunt resistor,

compares a voltage $V0$ at ends of the first shunt resistor and of the second shunt resistor, to which the positive electrode of the secondary battery is connected, with a predetermined first reference voltage $Vt1$, and

controls turning on and off of the switching device in such a manner as to satisfy the following conditions,

if the voltage $V0 >$ the voltage $Vt1$, then the supply current < the load current,

if the voltage $V0 =$ the voltage $Vt1$, then the supply current = the load current, and

if the voltage $V0 <$ the voltage $Vt1$, then the supply current > the load current.

4. The rechargeable electric apparatus according to any one of claims 1 to 3, wherein

when the load is not driven, the control unit calculates the supply current as a value obtained by dividing a voltage difference between the two ends of the first shunt resistor by the resistance value of the first shunt resistor,

calculates a leak current of the rechargeable electric apparatus as a value obtained by dividing a voltage difference between the two ends of the second shunt resistor by the resistance value of the second shunt resistor,

compares a voltage $V0$ at ends of the first shunt resistor and of the second shunt resistor, to which the positive electrode of the secondary battery is connected, with a predetermined second reference voltage $Vt2$, and

controls turning on and off of the switching device in such a manner as to satisfy the following conditions,

if the voltage $V0 <$ the voltage $Vt2$, then the supply current > the leak current, and

if the voltage $V0 \geq$ the voltage $Vt2$, then the supply current = the leak current.

5. The rechargeable electric apparatus according to any one of claims 1 to 4, further comprising:

a switch connected between the positive electrode of the secondary battery and the first and second shunt resistors, the switch being configured to be turned off when the supply current becomes equal to the load current or the leak current so as to electrically disconnect the secondary battery from the switching device and the load.

6. The rechargeable electric apparatus according to any one of claims 1 to 5, wherein

the control unit calculates a battery capacity of the secondary battery by:

subtracting a current obtained by dividing a voltage difference between the two ends of the second shunt resistor by the resistance value of the second shunt resistor from a current obtained by dividing a voltage difference between the two ends of the first shunt resistor by the resistance value of the first shunt resistor; and

accumulating a plurality of the values obtained by the subtraction.

**Amended claims under Art. 19.1 PCT**

1. A rechargeable electric apparatus configured to charge a secondary battery by using power supply from outside via a charge adapter configured to be attachably and detachably connected to the rechargeable electric apparatus, the rechargeable electric apparatus being provided with a load to be driven with power supply from the secondary battery or from outside via the charge adapter, the rechargeable electric apparatus comprising:

a switching device configured to receive the power supply from outside via the charge adapter, the switching device being configured to be turned on and off on the basis of a switching signal to supply a supply current to the rechargeable electric apparatus;

a first shunt resistor connected between the switching device and a positive electrode of the secondary battery, the first shunt resistor being configured to detect the supply current supplied to the rechargeable electric apparatus via the switching device;

a second shunt resistor connected between the load and the positive electrode of the secondary battery, the second shunt resistor being configured to detect a load current supplied to the load; and

a control unit configured to receive inputs of voltages at two ends of the first shunt resistor and at two ends of the second shunt resistor when the switching device is turned on, the control unit being configured to control turning on and off of the switching device on the basis of the inputted voltages to control the supply current and the load current, wherein

a resistance value of the first shunt resistor is set equal to or above a value obtained by dividing a least resolution of an A/D conversion voltage when the control unit converts an inputted analog voltage into a digital voltage by a minimum value of the supply current to be detected, and
a resistance value of the second shunt resistor is set equal to or above a value obtained by dividing the least resolution of the A/D conversion voltage when the control unit converts the inputted analog voltage into the digital voltage by a minimum detectable value of the load current.

2. The rechargeable electric apparatus according to claim 1, wherein
the control unit
calculates the supply current as a value obtained by dividing a voltage difference between the two ends of the first shunt resistor by the resistance value of the first shunt resistor,
calculates the load current as a value obtained by dividing a voltage difference between the two ends of the second shunt resistor by the resistance value of the second shunt resistor, and
controls turning on and off of the switching device in such a manner as to equalize the supply current and the load current.

3. The rechargeable electric apparatus according to any one of claims 1 and 2, wherein
when the load is driven, the control unit
calculates the supply current as a value obtained by dividing a voltage difference between the two ends of the first shunt resistor by the resistance value of the first shunt resistor,
calculates the load current as a value obtained by dividing a voltage difference between the two ends of the second shunt resistor by the resistance value of the second shunt resistor,
compares a voltage V0 at ends of the first shunt resistor and of the second shunt resistor, to which the positive electrode of the secondary battery is connected, with a predetermined first reference voltage Vt1, and
controls turning on and off of the switching device in such a manner as to satisfy the following conditions,
if the voltage V0 > the voltage Vt1, then the supply current < the load current,
if the voltage V0 = the voltage Vt1, then the supply current = the load current, and
if the voltage V0 < the voltage Vt1, then the supply current > the load current.

4. The rechargeable electric apparatus according to any one of claims 1 to 3, wherein
when the load is not driven, the control unit
calculates the supply current as a value obtained by dividing a voltage difference between the two ends of the first shunt resistor by the resistance value of the first shunt resistor,
calculates a leak current of the rechargeable electric apparatus as a value obtained by dividing a voltage difference between the two ends of the second shunt resistor by the resistance value of the second shunt resistor,
compares a voltage V0 at ends of the first shunt resistor and of the second shunt resistor, to which the positive electrode of the secondary battery is connected, with a predetermined second reference voltage Vt2, and
controls turning on and off of the switching device in such a manner as to satisfy the following conditions,
if the voltage V0 < the voltage Vt2, then the supply current > the leak current, and
if the voltage V0 ≥ the voltage Vt2, then the supply current = the leak current.

5. The rechargeable electric apparatus according to claim 4, further comprising:

a switch connected between the positive electrode of the secondary battery and the first and second shunt resistors, the switch being configured to be turned off when the supply current becomes equal to the load current or the leak current so as to electrically disconnect the secondary battery from the switching device and the load.

6. The rechargeable electric apparatus according to any one of claims 1 to 5, wherein
the control unit calculates a battery capacity of the secondary battery by
subtracting a current obtained by dividing a voltage difference between the two ends of the second shunt resistor by the resistance value of the second shunt resistor from a current obtained by dividing a voltage difference between the two ends of the first shunt resistor by the resistance value of the first shunt resistor, and
accumulating a plurality of the values obtained by the subtraction.

## FIG. 1

## FIG. 2

| **INTERNATIONAL SEARCH REPORT** | International application No. |
|---|---|
| | PCT/JP2011/068223 |

A. CLASSIFICATION OF SUBJECT MATTER
*H02J7/10*(2006.01)i, *H01M10/44*(2006.01)i, *H01M10/48*(2006.01)i, *H02J7/00* (2006.01)i

According to International Patent Classification (IPC) or to both national classification and IPC

B. FIELDS SEARCHED

Minimum documentation searched (classification system followed by classification symbols)
H02J7/10, H01M10/44, H01M10/48, H02J7/00

Documentation searched other than minimum documentation to the extent that such documents are included in the fields searched
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2009-131002 A  (Panasonic Electric Works Co., Ltd.),<br>11 June 2009 (11.06.2009),<br>paragraphs [0045] to [0050]; fig. 1, 7<br>(Family: none) | 1-3,6<br>4,5 |
| Y<br>A | JP 2006-254560 A  (Mitsubishi Electric Corp.),<br>21 September 2006 (21.09.2006),<br>paragraph [0010]; fig. 1<br>(Family: none) | 1-3,6<br>4,5 |
| Y | JP 9-130986 A  (Matsushita Electric Industrial Co., Ltd.),<br>16 May 1997 (16.05.1997),<br>paragraphs [0004] to [0007]<br>(Family: none) | 1-3,6 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>08 November, 2011 (08.11.11) | Date of mailing of the international search report<br>22 November, 2011 (22.11.11) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000201493 A

- JP 2010210892 A